# EUROPÄISCHE PATENTANMELDUNG

(11) **EP 1 845 007 A1**
(43) Veröffentlichungstag der Anmeldung: **17.10.2007**
(21) Anmeldenummer: 07104181.8
(22) Anmeldetag: 15.03.2007
(51) Int. Cl.: B62D 5/00, B62D 5/04, B62D 6/00

(54) **Verfahren zum Betrieb eines elektrischen Servolenksystems**

(30) Priorität: 13.04.2006 DE 102006017440
(71) Anmelder: ZF-Lenksysteme GmbH, 73527 Schwäbisch Gmünd (DE)
(72) Erfinder: Neitzel, Dr., Karl-Ernst, 73527, Schwäbisch Gmünd (DE); Greul, Roland, 73547, Lorch-Waldhausen (DE); Gruener, Stefan, 71549, Auenwald (DE)

(57) **Zusammenfassung**

Die Erfindung betrifft ein Verfahren zum Betrieb eines elektrischen Servolenksystems (1) eines Kraftfahrzeugs, bei welchem mittels einer Lenkhandhabe (2) ein Lenkradwinkel (δs) als Maß für einen gewünschten Radlenkwinkel (δ_{Fm}) für wenigstens ein lenkbares Rad (5a,5b) des Kraftfahrzeugs vorgegeben wird, bei welchem ein Zusatzwinkel (δ_{M}) generiert und zur Ermittlung eines Eingangswinkels (δ_{G}) eines Lenkgetriebes (4) des elektrischen Servolenksystems (1) dem Lenkradwinkel (δ_{S}) überlagert wird, bei welchem der Eingangswinkel (δ_{G}) des Lenkgetriebes (4) in einen korrigierten Radlenkwinkel (δ_{Fm}) für das wenigstens eine lenkbare Rad (5a,5b) des Kraftfahrzeugs umgesetzt wird und bei welchem ein elektrischer Servoantrieb (12) verwendet wird. Der elektrische Servoantrieb (12) wird zu einer von einem Fahrer unabhängigen Einstellung des gewünschten Radlenkwinkels (δ_{Fm}) für das wenigstens eine lenkbare Rad (5a,5b) des Kraftfahrzeugs verwendet, wobei die Überlagerung des Zusatzwinkels (δ_{M}) zur Einstellung eines vorgegebenen Handmoments an der Lenkhandhabe (2) für den Fahrer verwendet wird.

## Beschreibung

Die Erfindung betrifft ein Verfahren zum Betrieb eines elektrischen Servolenksystems eines Kraftfahrzeugs gemäß dem Oberbegriff von Anspruch 1. Die Erfindung betrifft ebenfalls ein Computerprogramm und ein Computerprogrammprodukt mit Programmcodemitteln, um ein derartiges Verfahren durchzuführen. Des weiteren betrifft die Erfindung ein elektrisches Servolenksystem eines Kraftfahrzeugs.

### Stand der Technik

Ein Lenksystem mit Überlagerungsmitteln ist aus der DE 197 51 125 A1 bekannt. Dort wird die Bewegung (Zusatzwinkel bzw. Motorwinkel) eines Stellantriebs, d. h. eines Elektromotors mittels eines Überlagerungsgetriebes (beispielsweise ein Planetengetriebe) mit dem Lenkradwinkel überlagert. Mit Hilfe der Überlagerungsmittel ist es möglich, einen von der Lenkhandhabe vorgegebenen Lenkradwinkel zur Erhöhung der Fahrstabilität bzw. des Komforts mit einem Zusatzwinkel zu überlagern, so dass sich fahrdynamikabhängig bzw. komfortabhängig ein variables Übersetzungsverhältnis zwischen Lenkradwinkel und mittlerem Lenkwinkel der lenkbaren Räder des Kraftfahrzeugs einstellt. Dadurch ist es sicherheitstechnisch z. B. möglich, ein Kraftfahrzeug, welches auszubrechen droht, durch eine entsprechende Korrektur des Lenkwinkels wieder in eine stabile Fahrsituation zurückzuführen. Die Überlagerungsmittel können andere Fahrdynamiksysteme (z. B. ein elektronisches Stabilitätsprogramm (ESP) oder ein Antiblockiersystem (ABS)) unterstützen. Komforttechnisch ist es auch möglich, einem Lenkradwinkel beispielsweise einen geschwindigkeitsabhängigen Zusatzwinkel zu überlagern. Dadurch kann bei niedrigen Fahrzeuggeschwindigkeiten ein relativ kleines Übersetzungsverhältnis eingestellt werden, d. h. eine relativ kleine Drehung der Lenkhandhabe führt zu einem relativ großen Lenkwinkel der Räder. Bei hohen Fahrzeuggeschwindigkeiten kann dagegen ein relativ großes Übersetzungsverhältnis eingestellt werden, damit sich die Fahrstabilität des Kraftfahrzeugs erhöht. Auch das erfindungsgemäße elektrische Servolenksystem weist Überlagerungsmittel auf.

Außerdem ist aus der DE 100 13 711 A1 ein Lenksystem bekannt, das unter anderem einen Servoantrieb zur Momentenunterstützung (Servolenkung) aufweist. Der Grad der Momentenunterstützung ist bei dem beschriebenen Lenksystem abhängig von der Fahrzeuggeschwindigkeit. Während bei langsamer Fahrzeuggeschwindigkeit die Momentenunterstützung größer ist (z. B. um beim Rangieren des Fahrzeugs das Lenkrad ohne großen Kraftaufwand betätigen zu können), wird die Momentenunterstützung bei höheren Geschwindigkeiten (z. B. um die Fahrstabilität bei einer Autobahnfahrt zu erhöhen) gesenkt. Der Servoantrieb kann elektrisch oder hydraulisch arbeiten. Bei dem erfindungsgemäßen elektrischen Servolenksystem kann die Momentenunterstützung elektrisch variiert werden.

Das in der DE 100 13 711 A1 beschriebene Lenksystem weist neben dem Servoantrieb auch Überlagerungsmittel auf, welche einen Zusatzwinkel erzeugen und den von der Lenkhandhabe vorgegebenen Lenkradwinkel mit diesem Zusatzwinkel überlagern.

In Kraftfahrzeugen werden zumeist elektrische Servolenksysteme bzw. elektromechanische Servosteller (electronic power steering, EPS) eingesetzt. Wünschenswert bzw. bekannt ist jedoch die vorstehend bereits angesprochene Kombination eines elektrischen Servolenksystems mit einer Überlagerungslenkung bzw. einem Überlagerungswinkelsteller (active steering, AS), um sowohl ein variables Unterstützungsmoment als auch ein variables Übersetzungsverhältnis zwischen Lenkradwinkel und mittlerem Radlenkwinkel der lenkbaren Räder der Kraftfahrzeuge funktional realisieren zu können. Sonach besteht nun neben den Grundfunktionen die Aufgabe der EPS auch darin, die Momentenabstützung des Überlagerungswinkelstellers für den Fahrer unmerklich zu machen.

Des weiteren sind aus dem Stand der Technik sogenannte Steer by Wire-Lenksysteme bekannt, bei welchen eine unabhängige Vorgabe von Lenkradmoment und Radlenkwinkel erfolgt, d. h. eine mechanische Entkopplung der Lenkbewegung des Fahrers von der Lenkung der Räder vorliegt. Lenkrichtung, Lenkwinkel und Lenkkraft bilden nur noch Daten, die eine Elektronik speisen und von dieser in entsprechende Lenkbefehle umgesetzt werden. Bei einem Steer by wire-Lenksystem ist im Normalbetrieb nur eine elektrische Signalverbindung zwischen der Lenkhandhabe und den gelenkten Rädern wirksam. Bei einem Ausfall des Steer by wire-Lenksystems muss auf eine mechanische oder hydraulische Ersatzlenkung zurückgegriffen werden. Diese Ersatzlenkung wird als Rückfallebene bezeichnet. Beim Betrieb der Rückfallebene muss der Fahrer höhere Betätigungskräfte oder Momente ausüben. Dadurch verringern sich Fahrsicherheit und Komfort erheblich. In der DE 100 42 308 A1 wird ein Steer by wire-Lenksystem vorgeschlagen, bei welchem die Einbußen hinsichtlich Fahrsicherheit und Komfort beim Betrieb der Rückfallebene reduziert werden sollen.

### Offenbarung der Erfindung

### Technische Aufgabe

Ausgehend davon liegt der vorliegenden Erfindung die Aufgabe zugrunde, ein Verfahren zum Betrieb eines elektrischen Servolenksystems eines Kraftfahrzeugs, ein Computerprogramm, ein Computerprogrammprodukt und ein elektrisches Servolenksystem eines Kraftfahrzeugs der eingangs erwähnten Art zu schaffen, welche eine unabhängige Vorgabe eines Radlenkwinkels und eines Handmoments an der Lenkhandhabe erlauben.

### Technische Lösung

Diese Aufgabe wird erfindungsgemäß durch die in Anspruch 1 genannten Merkmale gelöst. Die Aufgabe wird bezüglich des Computerprogramms durch Anspruch 3, bezüglich des Computerprogrammprodukts durch Anspruch 4 und bezüglich des elektrischen Servolenksystems durch Anspruch 5 gelöst.

Durch die erfindungsgemäßen Maßnahmen wird die durch die Verkopplung des elektrischen Servolenksystems mit der Überlagerungslenkung entstehende Mehrwertfunktionalität in vorteilhafter Weise genutzt, um eine Steer by Wire-Funktionalität, d. h. eine unabhängige Vorgabe von Radlenkwinkel und Lenkradmoment, zu schaffen. Durch den elektrischen Servoantrieb wird die aktive kinetische Entkopplung realisiert. Mit den Überlagerungsmitteln wird die kinematische Entkopplung erzielt. Dementsprechend wird erfindungsgemäß der elektrische Servoantrieb der EPS als reiner Radwinkelsteller betrachtet bzw. verwendet, insbesondere, da dessen Anordnung im Lenksystem dazu geeignet ist. Der Überlagerungswinkelsteller kann dann genutzt werden, um über den Zusatzwinkel ein Handmoment für den Fahrer an der Lenkhandhabe bzw. am Lenkrad einzustellen, d. h. um ein entsprechendes Feedback für den Fahrer zu schaffen. Es muss entsprechend eine Position gestellt werden, bei der sich die Wirkungen beider Steller derart wenigstens annähernd kompensieren, dass noch ein entsprechendes Moment für den Fahrer an der Lenkhandhabe spürbar ist. Dies führt in einfacher und vorteilhafter Weise zur eine hohen funktionalen Freiheit und den klassischen einstellbaren Sollgrößen der Steer by Wire-Lenksysteme, nämlich Soll-Radlenkwinkel und Soll-Handmoment. Durch eine derartige Neuinterpretation der bisherigen Regelung wird eine Steer by Wire-Funktionalität geschaffen. Gleichzeitig kann auf die herkömmlichen Lenksystemkomponenten zurückgegriffen werden, wobei weiterhin eine mechanische Rückfallebene besteht. Bei einer Störung bzw. einem Ausfall kann beispielsweise der Zusatzwinkelsteller abgeschaltet und der elektrische Servoantrieb zur herkömmlichen Momentenunsterstützung eingesetzt werden.

Sehr vorteilhaft ist es, wenn zur Einstellung des vorgegebenen Handmoments an der Lenkhandhabe für den Fahrer mittels des Zusatzwinkels ein Lenksäulenwinkel bzw. ein Drehwinkel der Lenksäule des elektrischen Servolenksystems unabhängig von dem Eingangswinkel des Lenkgetriebes des elektrischen Servolenksystems eingestellt wird. Der Zusatzwinkelsteller kann die kinematische Entkopplung des Lenksäulensystems bewirken, indem durch den Zusatzwinkel der Lenksäulenwinkel unabhängig vom Eingangswinkel des Lenkgetriebes bzw. vom Ritzelwinkel gewählt werden kann. Damit ermöglicht der frei wählbare Lenksäulenwinkel die Vorgabe eines Handmoments für den Fahrer an der Lenkhandhabe. Dieses ergibt sich aus einer Verdrehsteifigkeit und der Verdrehung des Lenkradwinkels und des Lenksäulenwinkels zueinander. Der elektrische Servoantrieb setzt die Vorgabe eines Radlenkwinkels beispielsweise direkt in eine Zahnstangenposition um und erlaubt zusätzlich die Momentenabstützung des Zusatzwinkelstellers auf der Zahnstange.

Das erfindungsgemäße Verfahren zum Betrieb eines elektrischen Servolenksystems eines Kraftfahrzeugs ist vorzugsweise als Computerprogramm auf einem bzw. verteilt auf mehreren Steuergeräten des elektrischen Servolenksystems realisiert, wobei auch andere Lösungen selbstverständlich in Frage kommen. Dazu ist das Computerprogramm in einem Speicherelement des wenigstens einen Steuergeräts gespeichert. Durch Abarbeitung auf einem Mikroprozessor des Steuergeräts wird das Verfahren ausgeführt. Das Computerprogramm kann auf einem computerlesbaren Datenträger (Diskette, CD, DVD, Festplatte, USB-Memorystick oder dergleichen) oder einem Internetserver als Computerprogrammprodukt gespeichert sein und von dort aus in das Speicherelement des Steuergeräts übertragen werden. Ein derartiges Computerprogramm bzw. Computerprogrammprodukt mit Programmcodemitteln ist in Anspruch 3 bzw. Anspruch 4 angegeben.

Anspruch 5 betrifft ein elektrisches Servolenksystem eines Kraftfahrzeugs.

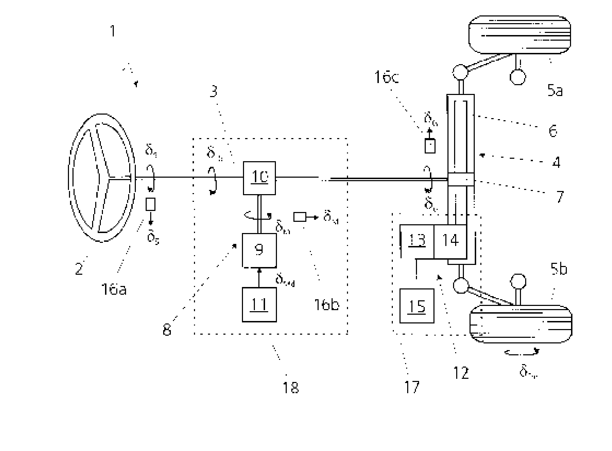

Nachfolgend ist anhand der Zeichnung prinzipmäßig ein Ausführungsbeispiel der Erfindung angegeben.

### Kurze Beschreibung der Zeichnungen

Die einzige Figur der Zeichnung zeigt eine vereinfachte schematische Darstellung eines erfindungsgemäßen elektrischen Servolenksystems, welches von einem erfindungsgemäßen Verfahren betrieben wird.

### Bevorzugtes Ausführungsbeispiel

Die Figur zeigt ein elektrisches Servolenksystem 1 eines nicht dargestellten Kraftfahrzeugs. Das elektrische Servolenksystem 1 weist eine als Lenkrad 2 ausgebildete Lenkhandhabe auf. Das Lenkrad 2 ist über eine Gelenkwelle bzw. Lenksäule 3 mit einem Lenkgetriebe 4 verbunden. Das Lenkgetriebe 4 dient dazu, einen Drehwinkel δ_{LS} der Lenksäule 3 in einen Radlenkwinkel δ_{Fm} von lenkbaren Rädern 5a, 5b des Kraftfahrzeugs umzusetzen. Das Lenkgetriebe 4 weist eine Zahnstange 6 und ein Ritzel 7 auf, an welches die Lenksäule 3 angreift. Das elektrisches Servolenksystem 1 umfasst darüber hinaus Überlagerungsmittel 8, die einen als Elektromotor 9 ausgebildeten Stellantrieb bzw. Zusatzwinkelsteller und ein von diesem angetriebenes Überlagerungsgetriebe 10 aufweisen. Das Überlagerungsgetriebe 10 ist als Planetengetriebe ausgebildet. In weiteren Ausführungsbeispielen könnte das Überlagerungsgetriebe 10 auch als Wellgetriebe oder dergleichen ausgebildet sein. Durch das Lenkrad 2 wird ein Lenkradwinkel δ_{S} als Maß für einen gewünschten Radlenkwinkel δ_{Fm} der lenkbaren Räder 5a, 5b des Kraftfahrzeugs vorgegeben. Mit Hilfe des Elektromotors 9 wird dann ein Überlagerungswinkel bzw. Zusatzwinkel δ_{M} generiert und durch das Überlagerungsgetriebe 10 mit dem Lenkradwinkel δ_{S} bzw. dem Drehwinkel δ_{LS} der Lenksäule 3 überlagert. Der Zusatzwinkel δ_{M} wird grundsätzlich zur Verbesserung der Fahrdynamik des Kraftfahrzeugs bzw. des Komforts erzeugt. Die Summe aus Lenkradwinkel δ_{S} und Zusatzwinkel δ_{M} ergibt den Eingangswinkel des Lenkgetriebes 4 bzw. im vorliegenden Ausführungsbeispiel den Ritzelwinkel δ_{G}.

Die Überlagerungsmittel 8 weisen ein elektronisches Steuergerät 11 auf, welches unter anderem der Regelung des Zusatzwinkels δ_{M} und des abgegebenen Moments des Elektromotors 9 dient. Auf dem elektronischen Steuergerät 11 läuft dazu ein Regelungsverfahren ab, welches als Regelungsstruktur bzw. als Computerprogramm auf einem nicht dargestellten Mikroprozessor des Steuergeräts 11 ausgeführt ist. Der Elektromotor 9 wird mit einem elektrischen Ansteuersignal δ_{Md}, welches dem Sollwert des von dem Elektromotor 9 zu erzeugenden Zusatzwinkels δ_{M} entspricht, angesteuert. Die Ansteuerung bzw. Regelung des Elektromotors 9 erfolgt üblicherweise in Abhängigkeit von der Fahrzeuggeschwindigkeit des Kraftfahrzeugs, d. h. das Übersetzungsverhältnis zwischen dem Lenkradwinkel δ_{S} und dem Ritzelwinkel δ_{G} bzw. dem Radlenkwinkel δ_{Fm} der Räder 5a, 5b wird durch die Überlagerung des Lenkradwinkels δ_{S} mit verschiedenen, geschwindigkeitsabhängigen Zusatzwinkeln δ_{M} in Abhängigkeit von der Fahrzeuggeschwindigkeit eingestellt. Dadurch ist es beispielsweise möglich, bei niedrigen Fahrzeuggeschwindigkeiten ein relativ kleines Übersetzungsverhältnis vorzugeben, bei welchem eine relativ geringe Drehung des Lenkrads 2 zu einem relativ großen Radlenkwinkel δ_{Fm} der Räder 5a, 5b führt. Ebenso ist es bei einer hohen Fahrzeuggeschwindigkeit aus Stabilitätsgründen denkbar, ein relativ großes Übersetzungsverhältnis iᵥ vorzugeben. Damit die vorstehend angeführten Steuerungs- bzw. Regelungsfunktionen ausgeführt werden können, erhält das Steuergerät 11 unter anderem als Eingangssignal die aktuelle Fahrzeuggeschwindigkeit (z. B. über den CAN-Bus des Kraftfahrzeugs).

Den Überlagerungsmitteln 8 nachgeordnet, weist das elektrische Servolenksystem 1 einen elektrischen Servoantrieb 12 auf, welcher unter anderem der variablen Momentenunterstützung dient. Der elektrische Servoantrieb 12 weist einen Elektromotor 13 zur Realisierung der Momentenunterstützung über ein Riemengetriebe 14 auf. Das Riemengetriebe 14 weist ein Antriebsritzel und eine Riemenscheibe zur Übertragung der Momentenunterstützung über ein Kugelumlaufgetriebe (nicht dargestellt) auf die Zahnstange 6 des elektrischen Servolenksystems 1 auf. Des weiteren ist ein elektronisches Steuergerät 15 zur Ansteuerung bzw. Regelung des Elektromotors 13 vorgesehen.

Die Erfindung wird anhand eines elektrischen Servolenksystems 1 mit einem Riemengetriebe 14 und einem separaten Kugelumlaufgetriebe zur Übertragung der Unterstützungskraft auf die Zahnstange 6, wie beispielsweise aus der DE 100 52 275 bekannt, beschrieben. Für weitere elektrische Servolenksystemtechnologien mit Momenten- bzw. Lenkunterstützung lassen sich jedoch eventuell mit geringfügigen Änderungen gleiche erfindungsgemäße Umsetzungen erzielen.

Außerdem weist das elektrische Servolenksystem 1 Sensoren 16a, 16b, 16c auf, welche den Lenkradwinkel δ_{S}, den Zusatzwinkel δ_{M} und den Ritzelwinkel δ_{G} messen bzw. äquivalente Signale liefern, aus denen diese Winkel δ_{S}, δ_{M}, δ_{G} bestimmt werden können. Des weiteren sind ein Lenkmomentsensor, ein Summenwinkelsensor und ein Spurstangensensor vorgesehen (nicht dargestellt). Die Steuergeräte 11, 15 erhalten die Ergebnisse der vorstehend genannten Sensoren als Eingangssignale zur weiteren Verarbeitung bzw. Steuerung oder Regelung der Elektromotoren 9, 13.

Erfindungsgemäß wird nun die durch die Verkopplung des elektrischen Servoantriebs 12 mit den Überlagerungsmitteln 8 innerhalb des elektrischen Servolenksystems 1 entstehende Mehrwertfunktionalität in vorteilhafter Weise genutzt, um eine Steer by Wire-Funktionalität, d. h. eine unabhängige Vorgabe von Radlenkwinkel δ_{Fm} und Lenkradmoment, zu schaffen. Dazu wird ein Verfahren zum Betrieb des elektrischen Servolenksystems 1 vorgeschlagen, bei welchem der elektrische Servoantrieb 12 zu einer von dem Fahrer des Kraftfahrzeugs unabhängigen Einstellung des gewünschten bzw. durch das elektrische Servolenksystem 1 oder durch andere Fahrdynamiksysteme (ESP oder dergleichen) vorgegebenen Radlenkwinkels δ_{Fm} für das wenigstens eine lenkbare Rad 5a, 5b des Kraftfahrzeugs verwendet wird (in der Figur durch den gestrichelten Bereich 17 angedeutet), wobei die Überlagerung des Zusatzwinkels δ_{M} zur Einstellung eines vorgegebenen Handmoments an der Lenkhandhabe 2 für den Fahrer verwendet wird (in der Figur durch den gestrichelten Bereich 18 angedeutet). Dabei kann ein dem durch den elektrischen Servoantrieb 12 eingestellten Radlenkwinkel δ_{Fm} entsprechendes oder ein beliebiges Handmoment eingestellt werden.

Zur Einstellung des vorgegebenen Handmoments an der Lenkhandhabe 2 wird mittels des Zusatzwinkels δ_{M} ein Lenksäulenwinkel bzw. Drehwinkel δ_{LS} der Lenksäule 3 des elektrischen Servolenksystems 1 unabhängig von dem Eingangswinkel des Lenkgetriebes 4, d. h. dem Ritzelwinkel δ_{G} des elektrischen Servolenksystems 1 eingestellt. Der Zusatzwinkelsteller 9 kann die kinematische Entkopplung des Lenksäulensystems bewirken, indem durch den Zusatzwinkel δ_{M} der Drehwinkel δ_{LS} der Lenksäule 3 unabhängig von dem Ritzelwinkel δ_{G} gewählt werden kann. Damit ermöglicht der frei wählbare Drehwinkel δ_{LS} der Lenksäule 3 die Vorgabe eines Handmoments für den Fahrer an der Lenkhandhabe 2. Dieses ergibt sich aus einer Verdrehsteifigkeit C_{D} und der Verdrehung des Lenkradwinkels δ_{S} und des Drehwinkels δ_{LS} der Lenksäule 3 zu M_{Hand} = C_{D} (δ_{G}- δ_{LS}). Der entsprechende zu stellende Zusatzwinkel δ_{M} ergibt sich dabei aus der vorgegebenen bzw. bekannten Dreiecksbeziehung zwischen Lenkradwinkel δ_{S}, Ritzelwinkel δ_{G} und Zusatzwinkel δ_{M}. Der elektrische Servoantrieb 12 setzt die Vorgabe eines Radlenkwinkels δ_{Fm} beispielsweise direkt in eine Zahnstangenposition um und erlaubt zusätzlich die Momentenabstützung des Zusatzwinkelstellers 9 auf der Zahnstange 6. Das erfindungsgemäße Verfahren kann auf einem der beiden elektronischen Steuergeräte 11, 15 oder verteilt auf beiden Steuergeräten 11, 15 ausgeführt werden. Darüber hinaus besteht in weiteren, nicht dargestellten Ausführungsbeispielen die Möglichkeit, das Verfahren auf einem übergeordneten Steuergerät bzw. System auszuführen und die elektronischen Steuergeräte 11, 15 entsprechend anzusteuern.

## Patentansprüche

1. Verfahren zum Betrieb eines elektrischen Servolenksystems (1) eines Kraftfahrzeugs, bei welchem mittels einer Lenkhandhabe (2) ein Lenkradwinkel (δ_{S}) als Maß für einen gewünschten Radlenkwinkel (δ_{Fm}) für wenigstens ein lenkbares Rad (5a,5b) des Kraftfahrzeugs vorgegeben wird, bei welchem ein Zusatzwinkel (δ_{M}) generiert und zur Ermittlung eines Eingangswinkels (δ_{G}) eines Lenkgetriebes (4) des elektrischen Servolenksystems (1) dem Lenkradwinkel (δ_{S}) überlagert wird, bei welchem der Eingangswinkel (δ_{G}) des Lenkgetriebes (4) in einen korrigierten Radlenkwinkel (δ_{Fm}) für das wenigstens eine lenkbare Rad (5a,5b) des Kraftfahrzeugs umgesetzt wird und bei welchem ein elektrischer Servoantrieb (12) verwendet wird, **dadurch gekennzeichnet, dass** der elektrische Servoantrieb (12) zu einer von einem Fahrer unabhängigen Einstellung des gewünschten Radlenkwinkels (δ_{Fm}) für das wenigstens eine lenkbare Rad (5a,5b) des Kraftfahrzeugs verwendet wird, wobei die Überlagerung des Zusatzwinkels (δ_{M}) zur Einstellung eines vorgegebenen Handmoments an der Lenkhandhabe (2) für den Fahrer verwendet wird.

2. Verfahren nach Anspruch 1, **dadurch gekennzeichnet, dass** zur Einstellung des vorgegebenen Handmoments an der Lenkhandhabe (2) für den Fahrer mittels des Zusatzwinkels (δ_{M}) ein Drehwinkel (δ_{LS}) der Lenksäule (3) des elektrischen Servolenksystems (1) unabhängig von dem Eingangswinkel (δ_{G}) des Lenkgetriebes (4) des elektrischen Servolenksystems (1) eingestellt wird.

3. Computerprogramm mit Programmcodemitteln, um ein Verfahren gemäß Anspruch 1 oder 2 durchzuführen, wenn dass Programm auf einem Mikroprozessor eines Computers, insbesondere auf einem Steuergerät (11,15) eines elektrischen Servolenksystems (1), ausgeführt wird.

4. Computerprogrammprodukt mit Programmcodemitteln, die auf einem computerlesbaren Datenträger gespeichert sind, um ein Verfahren gemäß Anspruch 1 oder 2 durchzuführen, wenn dass Programm auf einem Mikroprozessor eines Computers, insbesondere auf einem Steuergerät (11,15) eines elektrischen Servolenksystems (1), ausgeführt wird.

5. Elektrisches Servolenksystem (1) eines Kraftfahrzeugs, mit einer Lenkhandhabe (2) zur Vorgabe eines Lenkradwinkels (δ_{S}) als Maß für einen gewünschten Radlenkwinkel (δ_{Fm}) für wenigstens ein lenkbares Rad (5a,5b) des Kraftfahrzeugs, einem Lenkgetriebe (4), welches den Lenkradwinkel (δ_{S}) in den Radlenkwinkel (δ_{Fm}) des wenigstens einen lenkbaren Rades (5a,5b) des Kraftfahrzeugs umsetzt,- einem elektrischen Servoantrieb (12), und Überlagerungsmitteln (8) zur Erzeugung eines Zusatzwinkels (δ_{M}) durch einen Zusatzwinkelsteller (9) und zur Erzeugung eines Eingangswinkels (δ_{G}) des Lenkgetriebes (4) aus einer Überlagerung des Lenkradwinkels (δ_{S}) mit dem Zusatzwinkel (δ_{M}), wobei der Zusatzwinkelsteller (9) und der elektrische Servoantrieb (12) durch ein Verfahren gemäß Anspruch 1 oder 2 angesteuert werden.

6. Elektrisches Servolenksystem nach Anspruch 5, **dadurch gekennzeichnet, dass** der Zusatzwinkelsteller (9) und der elektrische Servoantrieb (12) durch wenigstens ein Steuergerät (11,15) angesteuert werden, auf welchem das Verfahren gemäß Anspruch 1 oder 2 ausgeführt wird.
